# EUROPEAN PATENT APPLICATION

(11) **EP 4 525 163 A1**
(43) Date of publication of application: **19.03.2025**
(21) Application number: 24196720.7
(22) Date of filing: 27.08.2024
(51) Int. Cl.: H01M 50/298, H01M 50/503, H01M 50/213, H01M 50/509

(54) **OUTPUT BUSBAR, BUSBAR ASSEMBLY AND BATTERY PACK**

(30) Priority: 12.09.2023 CN 202311172757; 12.09.2023 CN 202322473023 U; 25.03.2024 WO PCT/CN2024/083459
(71) Applicant: Eve Energy Co., Ltd., Huizhou, Guangdong 516006 (CN)
(72) Inventor: REN, Chaoju, Huizhou (CN); LU, Jungao, Huizhou (CN); ZHANG, Guojiang, Huizhou (CN); JIANG, Jibing, Huizhou (CN)
(74) Representative: Murgitroyd & Company

(57) **Abstract**

An output busbar includes an internal connection part and an external connection part connected to the internal connection part. A thickness of the external connection part is greater than a thickness of the internal connection part.

## Description

### TECHNICAL FIELD

The present disclosure relates to battery technologies, and more particularly, to an output busbar, a busbar assembly, and a battery pack.

### BACKGROUND

Generally, a battery pack includes multiple battery modules connected in series, and each of the battery modules includes multiple cells which are connected as a whole through a cells contact system (CCS) assembly. Specifically, the CCS assembly includes two output busbars respectively disposed at opposite ends of the battery module in the length direction and multiple connection busbars disposed between the two output busbars. One of the two output busbars connected to the positive terminal of a cell at one end of the battery module is a positive output bar, and the other of the two output busbars connected to the negative terminal of a cell at the other end of the battery module is a negative output bar. Two adjacent battery modules are connected in series, i.e., the negative output bar of one of the adjacent battery modules is connected to the positive output bar of the other of the adjacent battery modules.

As described above, on the one hand, the output busbar functions as the output terminal of the battery module and is welded to a cell of the battery module, so that the output busbar needs to be thin to facilitate welding. On the other hand, the output busbar functions to connect adjacent battery modules in series, and thus needs to have a large overcurrent capacity. In other words, part of the output busbar to which the cell of the battery module is welded needs to be thin, while part of the output busbar connected to an adjacent battery module needs to be widened or thickened, so that it difficult and costly to make a mold of the output busbar.

### SUMMARY

There present disclosure aims to solve a problem as follows: how to reduce the difficulty and cost of the production of the output busbar, and increase the reliability of the connection structure between two battery modules connected in series.

According to one or more embodiments of the present disclosure, an output busbar includes: an internal connection part; and an external connection part connected to the internal connection part. The internal connection part and the external connection part are separate, and a thickness of the external connection part is greater than a thickness of the internal connection part.

According to one or more embodiments of the present disclosure, a busbar assembly applied to a battery pack includes at least two Cells Contact System (CCS) assemblies connected in series. Each of the at least two CCS assemblies is applied to a battery module, each of the at least two CCS assemblies comprises two above-mentioned output busbars and multiple connection busbars arranged between the output busbars. One of the output busbars is a positive output bar, and an other of the output busbars is a negative output bar. In each of the at least two CCS assemblies, a current flow direction is from the positive output bar to the connection busbars and to the negative output bar, and two adjacent ones of the at least two CCS assemblies are connected in series through an inter-module aluminum bar.

According to one or more embodiments of the present disclosure, a battery pack includes a battery module and the above-mentioned busbar assembly. The battery module corresponds to each of the CCS assemblies and includes multiple cells.

(1) According to one or more embodiments of the present disclosure, the output busbar includes the external connection part and the connection part which are separate. The internal connection part having a small thickness is used for welding to the battery cell of the battery module at which the output busbar is located, thereby ensuring smooth welding of the output busbar and the battery cell, while the external connection part 11 having a large thickness is connected to an adjacent battery module in series, thereby ensuring the over-current capability of the output busbar.

(2) According to one or more embodiments of the present disclosure, each region of the external connection part has the same thickness, and each region of the internal connection part has the same thickness. This greatly reduces the respective mold opening difficulties of the external connection part and the internal connection part, thereby effectively reducing the production cost of the output busbar.

(3) According to one or more embodiments of the present disclosure, the output busbar including the external connection part and the internal connection part which are separate has a lower cost in modification and upgradation, that is, the output busbar may be redesigned by changing only the parameters of the external connection part or changing only the parameters of the internal connection part. Moreover, the structure design in which the thickness of the external connection part is greater than the thickness of the internal connection part can effectively improve the structure strength of the output busbar, so that the reliability of the connection structure can be improved when the battery modules are connected in series.

### BRIEF DESCRIPTION OF THE DRAWINGS

FIG. 1 is a schematic perspective view of a negative output bar according to one or more embodiments of the present disclosure.
FIG. 2 is a schematic front view of a negative output bar according to one or more embodiments of the present disclosure.
FIG. 3 is a schematic perspective view of a positive output bar according to one or more embodiments of the present disclosure.
FIG. 4 is a schematic front view of a positive output bar according to one or more embodiments of the present disclosure.
FIG. 5 is a schematic perspective view of a CCS assembly according to one or more embodiments of the present disclosure.
FIG. 6 is a schematic perspective view of a busbar assembly according to one or more embodiments of the present disclosure.
FIG. 7 is a schematic perspective view of a battery pack according to one or more embodiments of the present disclosure.
FIG. 8 is a schematic perspective view of a cell according to one or more embodiments of the present disclosure.
FIG. 9 is a schematic perspective view of a negative output bar according to one or more embodiments of the present disclosure.
FIG. 10 is a schematic front view of a negative output bar according to one or more embodiments of the present disclosure.
FIG. 11 is a schematic perspective view of a positive output bar according to one or more embodiments of the present disclosure.
FIG. 12 is a schematic front view of a positive output bar according to one or more embodiments of the present disclosure.
FIG. 13 is a schematic perspective view of two CCS assemblies connected in series according to one or more embodiments of the present disclosure.
FIG. 14 schematically shows assembly of an inter-module aluminum bar and an external connection part according to one or more embodiments of the present disclosure.

### DETAILED DESCRIPTION

Some embodiments of the present disclosure will be described in detail below with reference to the drawings. The embodiments are described for illustrative purposes only and are not intended to limit the present disclosure.

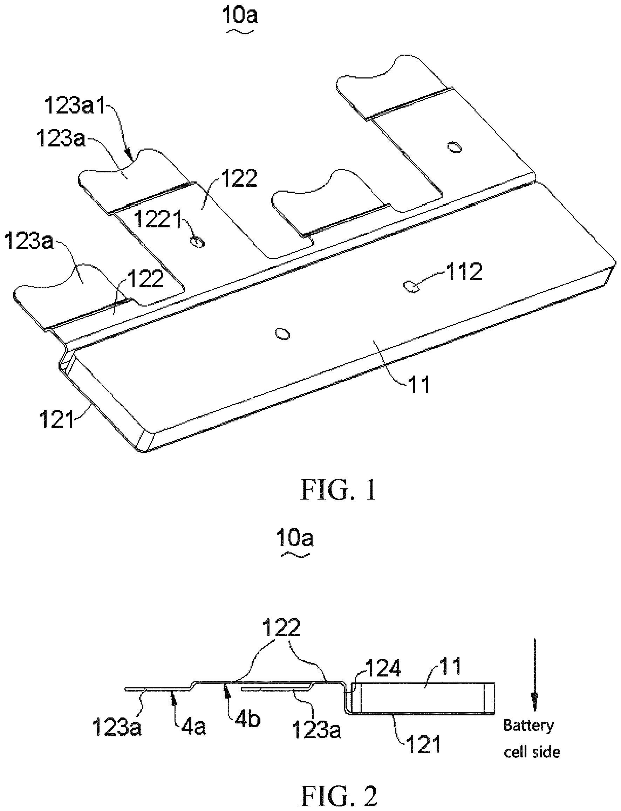

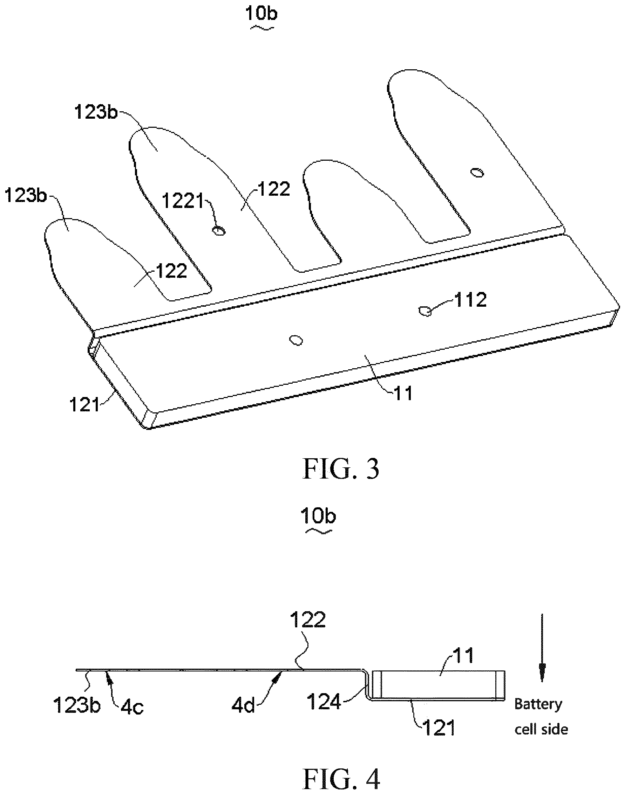

Referring to FIGS. 1 to 4, an output busbar includes an internal connection part and an external connection part 11 connected to the internal connection part. The internal connection part and the external connection part 11 and separate. The thickness of the external connection part 11 is greater than the thickness of the internal connection part. In use, the internal connection part having a small thickness is used for welding to the cell 20 of the battery module at which the output busbar is located, thereby ensuring smooth welding of the output busbar and the cell 20, while the external connection part 11 having a large thickness is connected to the adjacent battery module in series, thereby ensuring the over-current capability of the output busbar. The molds of the external connection part 11 and the internal connection part which are separate may be separately opened. As shown in FIGS. 2 and 4, each region of the external connection part 11 has the same thickness, and each region of the internal connection part has the same thickness. This greatly reduces the respective mold opening difficulties of the external connection part 11 and the internal connection part, thereby effectively reducing the production cost of the output busbar. Also, the output busbar including the external connection part 11 and the internal connection part which are separate has a lower cost in modification and upgradation, that is, the output busbar may be redesigned by changing only the parameters of the external connection part 11 or changing only the parameters of the internal connection part. Moreover, the structure design in which the thickness of the external connection part 11 is greater than the thickness of the internal connection part can effectively improve the structure strength of the output busbar, so that the reliability of the connection structure can be improved when the battery modules are connected in series.

In one or more embodiments of the present disclosure, the internal connection part is formed by stamping. The internal connection part is welded to the external connection part 11.

As shown in FIGS. 2 and 4, the internal connection part includes a main part 121 connected to the external connection part 11; an extension part 122 is provided on one side of the main part 121 away from the external connection part 11 and is for connection to the positive terminal 201 or the negative terminal 202 of the cell 20. The extension direction of the extension part 122 is parallel to the extension direction of the main part 121, and the extension part 122 is connected to the main part 121 by the bend part 124. Further, the main part 121, the bend part 124 and the extension part 122 are integrally formed.

In one or more embodiments of the present disclosure, the external connection part 11 and the internal connection part are made of aluminum or copper.

According to one or more embodiments of the present disclosure, the internal connection part is made of aluminum to facilitate welding to the positive terminal 201 and the negative terminal 202 of the cell 20 made of aluminum.

In one or more embodiments of the present disclosure, both the internal connection part and the external connection part 11 are made of aluminum, thereby facilitating welding of the internal connection part and the external connection part 11.

In one or more embodiments of the present disclosure, the internal connection part is made of aluminum, and the external connection part 11 is made of copper. The internal connection part is welded to the external connection part 11. With this configuration, the electron transmission rate of the output busbar can be improved, facilitating rapid charging and discharging of the battery module or battery pack to which the output busbar is applied.

As shown in FIGS. 1 to 4, the main part 121 is located on below the external connection part 11. The main part 121 is welded to the external connection part 11, and the welding point of the main part 121 and the external connection part 11 is located on one side of the main part 121 away from the external connection part 11. When the external connection part 11 is welded to the internal connection part, the welding points are concentrated in the region of the main part 121. Specifically, as shown in FIGS. 2 and 4, the welding operation is performed on the lower surface of the main part 121 to weld the main part 121, that is, the internal connection part, to the external connection part 11, so that the uneven structure generated at the welding points are located below the output busbar, that is, the flatness and cleanliness of the upper surface of the output busbar can be ensured, thereby facilitating the formation of the structure for series connection of the battery modules.

As shown in FIGS. 1 and 3, the external connection part 11 is provided with a first location hole 112, and the internal connection part 11 is provided with a second location hole 1221. According to one or more embodiments of the present disclosure, the first location hole 112 and the second location hole 1221 are provided so as to facilitate the positioning and assembly of the output busbar and other parts of the battery module or battery pack, such as an insulating film, a supporting plate and the like provided above or below the output busbar. It should be noted that both the insulating film and the supporting plate are provided with hole structures respectively corresponding to the first location hole 112 or the second location hole 1221.

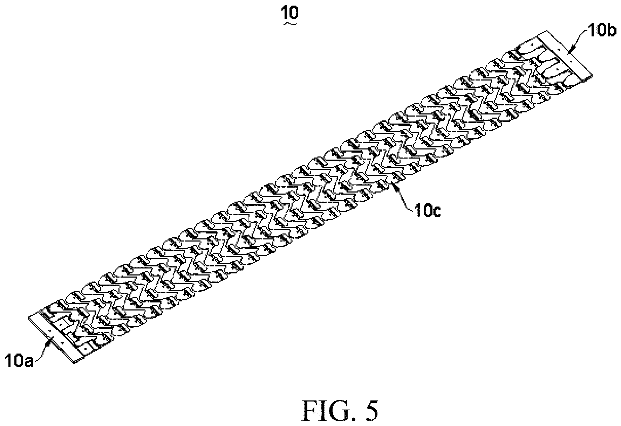

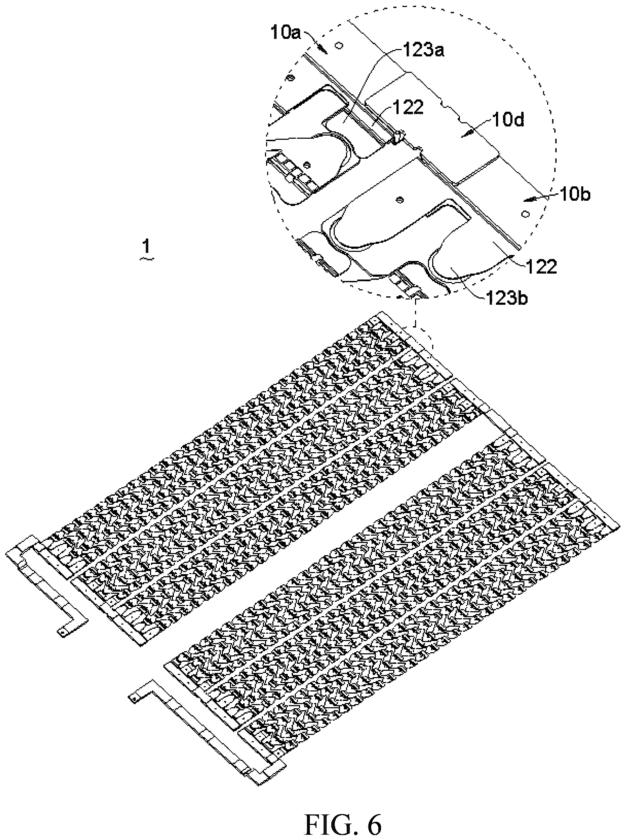

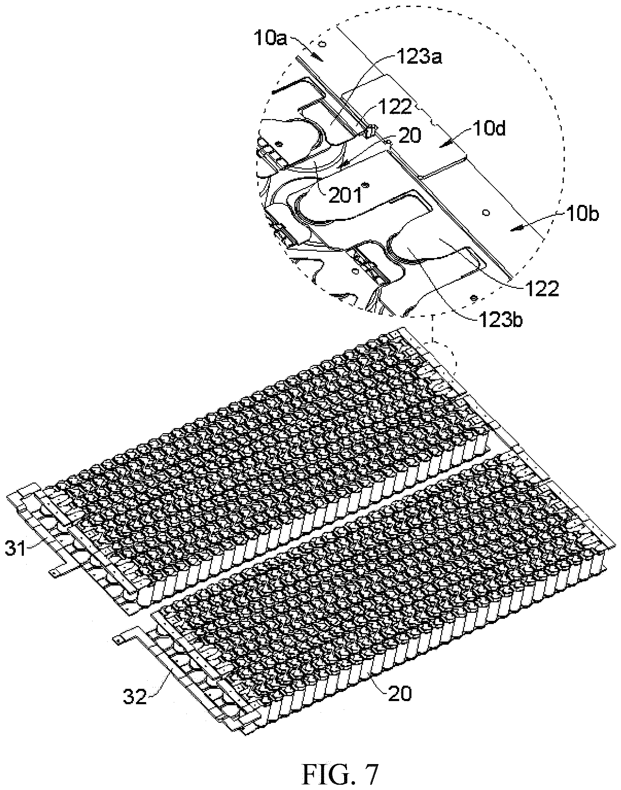

As shown in FIGS. 1 to 8, according to one or more embodiments of the present disclosure, the busbar assembly 1 as shown in FIG. 6, which is applied to the battery pack as shown in FIG. 7, includes at least two CCS assemblies 10 shown in FIG. 5 which are connected in series. Each of the CCS assemblies 10 is applied to a battery module. Each of the CCS assemblies 10 includes multiple connection busbars 10c and two output busbars as described above. The multiple connection busbars 10c are arranged between the two output buses. One of the output busbars is a positive output bar 10b and the other one of the output busbars is a negative output bar 10a. In the same CCS assembly 10, the current flows from the positive output bar 10b to the connection busbar 10c, and to the negative output bar 10a. Two adjacent CCS assemblies 10 are connected in series through the inter-module aluminum bar 10d. The busbar assembly 1 including the above-mentioned output busbars has a high structure strength, and the probability of looseness or damage in the connection structure between two adjacent CCS assemblies 10 is low, with a high reliability.

Specifically, in two adjacent CCS assemblies 10, one end of the inter-module aluminum bar 10d is connected to the external connection part 11 of the positive output bar 10b of one of the CCS assemblies 10, and the other end of the inter-module aluminum bar 10d is connected to the external connection part 11 of the negative output bar 10a of the other one of the CCS assemblies 10. In one or more embodiments of the present disclosure, the inter-module aluminum bar 10d is connected to respective external connection parts 11 of the positive output bar 10b and the negative output bar 10a through bolts or screws. In one or more embodiments of the present disclosure, the inter-module aluminum bar 10d is welded to respective external connection part 11 of the positive output bar 10b and the negative output bar 10a.

As shown in FIGS. 6 and 7, in one or more embodiments of the present disclosure, the inter-module aluminum bar 10d fits the upper surface of the external connection part 11. The output busbars of the two adjacent CCS assemblies 10 are connected in series through the inter-module aluminum bar 10d, which is easy. In use, the inter-module aluminum bar 10d is placed on the upper surfaces of the external connection parts 11 of the output busbars for welding, which can improve the assembly efficiency of the battery pack.

Optionally, the busbar assembly 1 further includes a signal acquisition part (not shown), and there is a correspondence with the signal acquisition part and each of the CCS assemblies 10. The signal acquisition part may be a flexible flat cable (FFC), a flexible printed circuit (FPC), or an acquisition wire harness, and is for acquiring the temperature signal and the voltage signal of the battery modules.

In one or more embodiments of the present disclosure, as shown in FIG. 7, a battery pack includes two battery groups connected in series through inter-module aluminum bar 10d. Specifically, each of the battery groups includes three battery modules connected in series, and each of the battery modules includes multiple cells 20. In one or more embodiments of the present disclosure, each of the battery modules includes four cells 20 connected in parallel with in the wide direction thereof. Accordingly, in each of the output busbars, four extension parts 122 respectively corresponding to the four cells 20 are provided on one side of the main part 121 away from the external connection part 11. Specifically, as shown in FIGS. 1, 3, and 7, the negative connection sheet 123a is provided on the free end of the extension part 122 of the negative output bar 10a and is for welding to the negative terminal 202 of the corresponding cell 20, and the negative connection sheet 123a and the free end of the extension part 122 of the negative output bar 10a are integrally formed. The positive connection sheet 123b is provided on the free end of each of the extension parts 122 of the positive output bar 10b and is for welding to the positive terminal 201 of the corresponding cell 20, and the positive connection sheet 123b and the free end of each of the extension parts 122 of the positive output bar 10b are integrally formed.

In one or more embodiments of the present disclosure, the battery modules correspond respectively to the CCS assemblies 10. In order to increase the battery density of each of the battery modules, four cells 20 located at one of the ends of each of the battery modules are staggered in the width direction of each of the battery modules. Accordingly, the four extension parts 122 have different lengths, and two long extension parts and two short extension parts are staggered to adapt the arrangement of the cells 20 of each of the battery modules. It will be appreciated that the lengths and the arrangement of the extension parts 122 depend on the arrangement of the cells 20 of each of the battery modules. For example, in the width direction of each of the battery modules, the four cells 20 are arranged in sequence, that is, the four cells 20 at one of the ends of each of the battery modules are flush. In this case, the four extensions 122 have equal lengths.

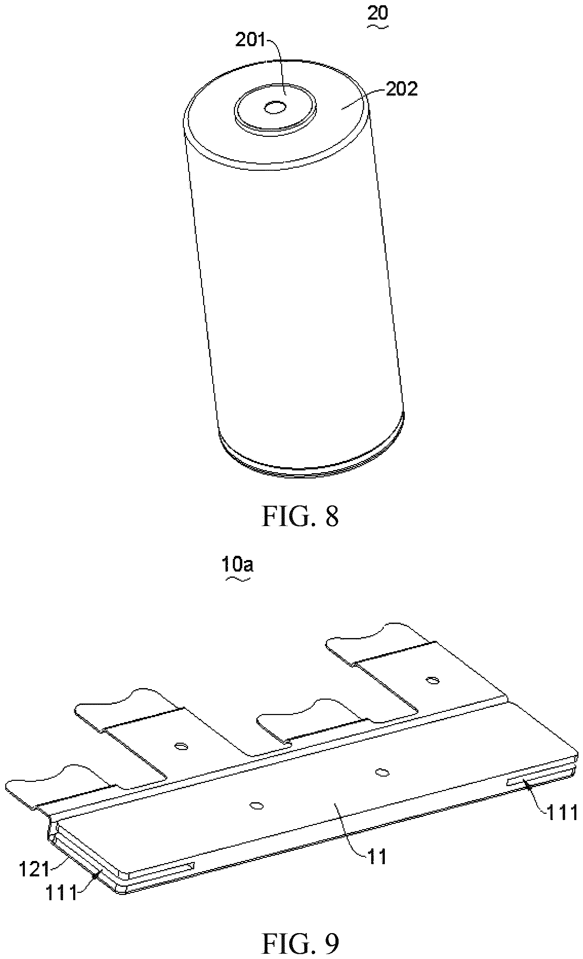

As shown in FIGS. 2 and 4, the side surface of the negative connection sheet 123a facing the cell 20 is the first side surface 4a, the side surface of the extension part 122 connected to the negative connection sheet 123a facing the cell 20 is the second surface 4b, the side surface of the positive connection sheet 123b facing the cell 20 is the third surface 4c, and the side surface of the extension part 122 connected to the positive connection sheet 123b facing the cell 20 is the fourth surface 4d. The first side surface 4a is closer to the cell 20 than the second side surface 4b, and the third side surface 4c is flush with the fourth side surface 4d. In one or more embodiments of the present disclosure, as shown in FIG. 8, since the positive terminal 201 of the cell 20 is closer to the output busbar than the negative terminal 202 of the cell 20, in order to reduce the thickness of the battery pack, the third side surface 4c is flush with the fourth side surface 4d, and the fourth side surface 4d is flush with the second side surface 4b. So that it is ensured that the positive output bar 10b and the negative output bar 10a are at the same level, thereby better connecting the negative connection sheet 123a to the negative terminal 202 of the cell 20 by reducing the height of the negative connection sheet 123a.

As shown in FIG. 1, in one or more embodiments of the present disclosure, an arc-shaped avoidance notch 123a1 is provided at one end of the negative connection sheet 123a facing the positive terminal 201 of the cell 20. There is an arc transition between the side surface of the arc-shaped avoidance notch 123a1 facing the positive terminal 201 of the cell 20 and the peripheral side surface of the negative connection sheet 123a. The arc-shaped avoidance notch 123a1 serves to avoid the positive terminal 201 of the cell 20 so as to increase the contact area of the negative connection sheet 123a with the negative terminal 202 of the cell 20. There is an arc transition between the side surface of the arc-shaped avoidance notch 123a1 facing the positive terminal 201 of the cell 20 and the peripheral side surface of the negative connection sheet 123a, so that the stress concentrations respectively at both ends of the arc-shaped avoidance notch 123a1 are reduced, and loss caused by scratching of the output busbar and other parts during assembly.

The battery pack further includes a positive output copper bar 31 connected to the positive output bar 10b of the battery module on the positive side of the battery pack, and a negative output copper bar 32 connected to the negative output bar 10a of the battery module on the negative side of the battery pack. The positive output bar is the positive output terminal of the battery pack, and the negative output bar is the negative output terminal of the battery pack.

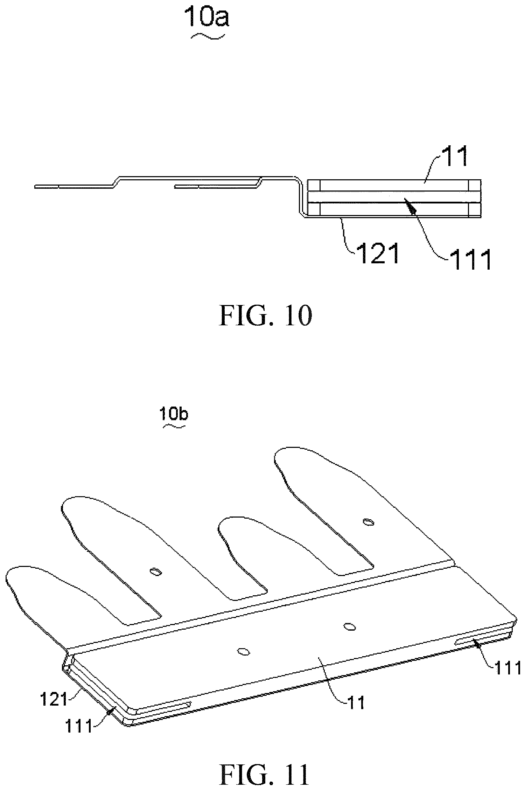

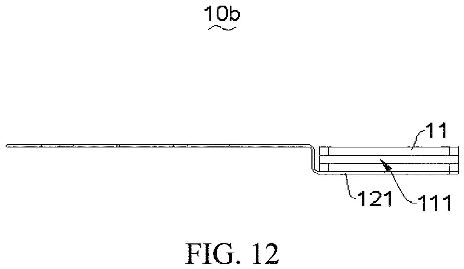

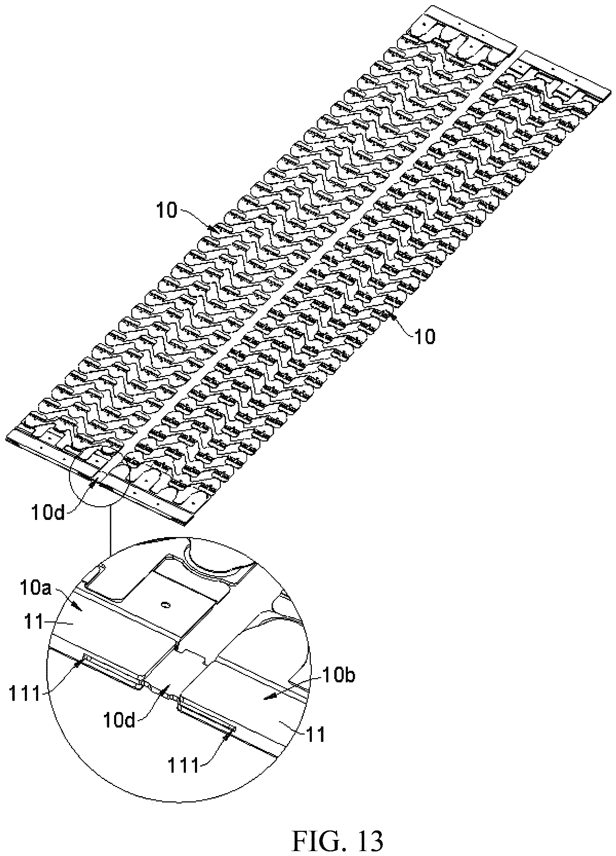

Referring to FIGS. 9 to 13, in one or more embodiments of the present disclosure, accommodating troughs 111 for accommodating the inter-module aluminum bar 10d are provided respectively on both ends of the external connection part 11 in a length direction. The length direction of the external connection part 11 is perpendicular to the extension direction of the extension part 122. In one or more embodiments of the present disclosure, when two adjacent battery modules are connected in series by the inter-module aluminum bar 10d, the inter-module aluminum bar 10d is mounted into the accommodating trough 111 and then welded to the external connection part 11, so that the strength of the connection between the external connection part 11 and the inter-module aluminum bar 10d can be effectively improved.

In one or more embodiments of the present disclosure, the accommodating trough 111 is provided on both end surfaces of the external connection part 11 in the length direction. The width direction of the accommodating trough 1 11 is the same as the thickness direction of the external connection part 11. With this configuration, it is possible to achieve the purpose of not occupying the height space of the battery system by not increasing the overall thickness of the output busbar while the inter-module aluminum busbar 10d and the external connection part 11 are connected, thereby reducing the overall height of the battery pack and increasing the energy density of the battery pack to a certain extent. In one or more embodiments of the present disclosure, each of the accommodating troughs 111 extends through the side wall on one side of the external connection part 11 away from the extension part 122. With this configuration, it is convenient to mount the inter-module aluminum bars 10d in the accommodating troughs 111. Further, each of the accommodating troughs 111 extends through the side wall on one side of the external connection part 11 adjacent to the extension part 122. With this configuration, the adaptability of the external connection part 11 can be improved, and the difficulty in assembling the external connection part 11 and the main part 121 can be reduced.

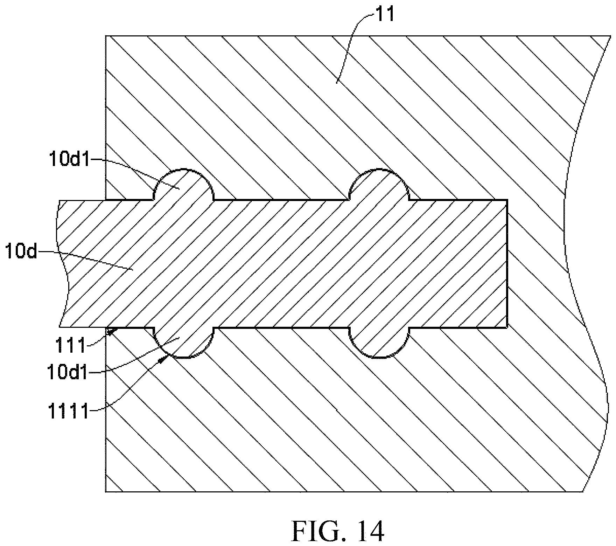

As shown in FIG. 14, in one or more embodiments of the present disclosure, in order to further improve the connection strength of assembling the inter-module aluminum bar 10d and the external connection 11 and prevent the inter-module aluminum bar 10d from detaching from the accommodating trough 111 in the length direction of the external connection part 11, a limit groove 1111 is provided on the groove wall of each of the accommodating troughs 111, and the extension direction of the limit groove 1111 is parallel to the extension direction of the extension part 122. A limit protrusion 10d1 fitting the limit groove 1111 is provided on the inter-module aluminum bar 10d. When the inter-module aluminum bar 10d is embedded in at least one of the accommodating troughs 111, the limit protrusion 10d1 is slidably embedded in the limit groove 1111.

In one or more embodiments of the present disclosure, the limit groove 1111 may be an arc groove, a rectangular groove, a trapezoidal groove, a triangular groove, or the like. Accordingly, the limit protrusion 10d1 can fit the shape of the limit groove 1111, and can slide relative to the groove wall of the limit groove 1111 in the extension direction of the limit groove 1111, which is not specifically limited. It should be noted that, in order to improve the strength of the connection between the inter-module aluminum bar 10d and the external connection part 11, according to one or more embodiments of the present disclosure, the limit protrusion 10d1 can fill the limit groove 1111. That is, when the limit groove 1111 is an arc groove, the axial cross-section of the limit protrusion is also arc, so that the limit groove 1111 can be filled fully in the radial direction and the axial direction to ensure the strength of the connection between the inter-module aluminum bar 10d and the external connection part 11.

Further, the limit groove 1111 extends through two side walls of the external connection part 11 respectively away from and near the extension part 122, so as to facilitate the assembly of the limit protrusion 10d1 and the limit groove 1111.

According to one or more embodiments of the present disclosure, the internal connection part comprises a main part connected to the external connection part, and an extension part for connecting to a positive terminal or a negative terminal of a cell is provided on a side of the main part away from the external connection part.

According to one or more embodiments of the present disclosure, the main part and the extension part are integrally formed.

According to one or more embodiments of the present disclosure, the main part is located below the external connection part, and the main part and the external connection part are welded on a side surface of the main part away from the external connection part.

According to one or more embodiments of the present disclosure, the extension direction of the extension part is parallel to the extension direction of the main part, the extension part and the main part are connected through a bend part; and the main part, the bend part and the extension part are integrally formed.

According to one or more embodiments of the present disclosure, the external connection part is provided with a first location hole, and the internal connection part is provided with a second location hole.

According to one or more embodiments of the present disclosure, the external connection part of the positive output bar of one of the two adjacent CCS assemblies is a first external connection part, the external connection part of the negative output bar of another one of the two adjacent CCS assemblies is a second external connection part, an end of the inter-module aluminum bar is connected to the first external connection part, and an other end of the inter-module aluminum bar is connected to the second external connection part.

According to one or more embodiments of the present disclosure, the inter-module aluminum bar fits respective upper surfaces of the first external connection part and the second external connection part.

According to one or more embodiments of the present disclosure, an accommodating trough for accommodating the inter-module aluminum bar is provided on each of both ends of the external connection part of each of the output busbars in a length direction which is perpendicular to an extension direction of the extension part.

According to one or more embodiments of the present disclosure, the accommodating trough is provided on each of both end surfaces of the external connection part of each of the output busbars in the length direction.

According to one or more embodiments of the present disclosure, the accommodating trough extends through a side wall of the external connection part of each of the output busbars away from the extension part.

According to one or more embodiments of the present disclosure, the accommodating trough extends through a side wall of the external connection part of each of the output busbars near the extension part.

According to one or more embodiments of the present disclosure, a limit groove extending in a direction parallel to the extension direction of the extension part is provided on a groove wall of the accommodating trough, a limit protrusion fitting the limit groove is provided on the inter-module aluminum bar, and when the inter-module aluminum bar is embedded in the accommodating trough, the limit protrusion is slidably embedded in the limit groove.

According to one or more embodiments of the present disclosure, the extension part of the negative output bar has a first free end, a negative connection sheet for welding to the negative terminal of the cell is provided at the first free end, and the negative connection sheet and the first free end are integrally formed; and the extension part of the positive output bar has a second free end, a positive connection sheet for welding to the positive terminal of the cell is provided at the second free end, and the positive connection sheet and the second free end are integrally formed.

According to one or more embodiments of the present disclosure, a side surface of the negative connection sheet facing the cell is a first side surface, a surface of the extension part of the negative out bar facing the cell is a second surface, a surface of the positive connection sheet facing the cell is a third surface, and a surface of the extension part of the positive out bar facing the cell is a fourth side surface; and the first side surface is closer to the cell than the second side surface, and the third side surface is flush with the fourth side surface.

According to one or more embodiments of the present disclosure, an arc-shaped avoidance notch is provided on an end of the negative connection sheet facing the positive terminal of the cell, and there is an arc transition between a side surface of the arc-shaped avoidance notch facing the positive terminal of the cell and a peripheral side surface of the negative connection sheet.

According to one or more embodiments of the present disclosure, the busbar assembly further comprises a signal acquisition part corresponding to each of the CCS assemblies.

According to one or more embodiments of the present disclosure, the battery pack further comprises: a positive output copper bar connected to the positive output bar; and a negative output copper bar connected the positive output copper bar.

Some embodiments of the present disclosure have been described in detail above. The description of the above embodiments merely aims to help to understand the present disclosure. Many modifications or equivalent substitutions with respect to the embodiments may occur to those of ordinary skill in the art based on the present disclosure. Thus, these modifications or equivalent substitutions shall fall within the scope of the present disclosure.

## Claims

1. An output busbar, comprising:
an internal connection part; and
an external connection part connected to the internal connection part,
wherein a thickness of the external connection part is greater than a thickness of the internal connection part.

2. The output busbar according to claim 1, wherein the internal connection part comprises:
a main part connected to the external connection part; and
an extension part provided on a side of the main part away from the external connection part, the extension part being connectable to a positive terminal of a cell or a negative terminal of the cell.

3. The output busbar according to claim 2, wherein the main part and the extension part are integrally formed.

4. The output busbar according to claim 2, wherein the main part is located below the external connection part, and the main part and the external connection part are welded on a side of the main part away from the external connection part.

5. The output busbar according to claim 2, wherein an extension direction of the extension part is parallel to an extension direction of the main part, and the extension part and the main part are connected through a bend part; and
the main part, the bend part and the extension part are integrally formed.

6. The output busbar according to claim 1, wherein the external connection part is provided with a first location hole, and the internal connection part is provided with a second location hole.

7. A busbar assembly for a battery pack, comprising a plurality of cells contact system, CCS, assemblies respectively for battery modules of the battery pack, the CCS assemblies being connected in series,
wherein each of the CCS assemblies comprises two output busbars respectively as a positive output bar and a negative output bar, each of the two output busbars being according to any one of claims 1 to 6, and a plurality of connection busbars arranged between the two output busbars to enable a current to flow from the positive output bar to the negative output bar through the connection busbars; and
two adjacent ones of the CCS assemblies are connected in series through an inter-module bar.

8. The busbar assembly according to claim 7, wherein the external connection part of the positive output bar of one of the two adjacent ones of the CCS assemblies, as a first external connection part, and the external connection part of the negative output bar of another one of the two adjacent ones of the CCS assemblies, as a second external connection part, are connected to two ends of the inter-module bar, respectively.

9. The busbar assembly according to claim 8, wherein the inter-module bar is attached to each of respective upper surfaces of the first external connection part and the second external connection part.

10. The busbar assembly according to claim 8, wherein each of opposite ends of the external connection part of the each of the two output busbars in a length direction is provided with an accommodating trough for accommodating the inter-module bar, the length direction of the external connection part of the each of the two output busbars being perpendicular to an extension direction of the extension part of the internal connection part of the each of the two output busbars.

11. The busbar assembly according to claim 10, wherein the accommodating trough is provided in each of opposite end surfaces of the external connection part of the each of the two output busbars in the length direction.

12. The busbar assembly according to claim 10, wherein the accommodating trough penetrates a side wall of the external connection part of the each of the two output busbars away from the extension part of the internal connection part of the each of the two output busbars.

13. The busbar assembly according to claim 12, wherein the accommodating trough further penetrates a side wall of the external connection part of the each of the two output busbars close to the extension part of the internal connection part of the each of the two output busbars.

14. The busbar assembly according to claim 10, wherein a groove wall of the accommodating trough is provided with a limit groove extending in a direction parallel to the extension direction of the extension part; and
the inter-module bar is provided with a limit protrusion adaptable to the limit groove, and when the inter-module bar is embedded in the accommodating trough, the limit protrusion is slidably embedded in the limit groove.

15. A battery pack, comprising a plurality of battery modules and a busbar assembly according to any one of claims 7 to 14,
wherein the battery modules are respectively for the plurality of cells contact system, CCS, assemblies, and each of the battery modules comprises a plurality of cells.
